# EUROPEAN PATENT APPLICATION

(11) **EP 2 312 836 A2**
(43) Date of publication of application: **20.04.2011**
(21) Application number: 09773746.4
(22) Date of filing: 02.07.2009
(51) Int. Cl.: H04N 5/45

(54) **BROADCAST RECEIVER AND MULTI-SCREEN PROCESSING METHOD USING SAME**

(30) Priority: 02.07.2008 KR 20080063919
(71) Applicant: LG Innotek Co., Ltd, Seoul 150-721 (KR)
(72) Inventor: KIM, Dong Woo, Seoul 100-714 (KR)
(74) Representative: Novagraaf Technologies
(86) International application number: PCT/KR2009/003628
(87) International publication number: WO 2010/002210

(57) **Abstract**

Provided are a broadcast receiver and a multi-screen processing method using the same. The broadcast receiver includes a broadcast receiving unit, a decoding unit, an OSD generating unit, a multi-screen processing unit, and a control unit. The broadcast receiving unit is configured to receive a broadcast signal of a physical channel. The decoding unit is configured to decode the received broadcast signal into data of an audio service channel and a video service channel. The OSD generating unit is configured to output an image to an OSD layer in a multi-screen mode. The multi-screen processing unit is configured to process a first screen and a second screen of a multi-screen by using the output data of the OSD generating unit and the decoding unit. The control unit is configured to control each of the units in the multi-screen mode.

## Description

### TECHNICAL FIELD

The present disclosure relates to a broadcast receiver and a multi-screen processing method using the same.

### BACKGROUND ART

Television (TV) technology is being developed for image display devices, and a broadcast signal transmission scheme is also being developed in the TV technology. Accordingly, interest in digital TVs based on digital transmission schemes is increasing.

With the acceleration of digital broadcast technology development, high-definition broadcast contents are broadcasted through satellite/terrestrial/cable channels because of various advantages. As compared to conventional analog TVs, digital broadcast can provide various supplementary information as well as high definition (HD) contents.

In the digital broadcast, a video uses MPEG-2 and an audio uses an AC-3 compression scheme. The compressed information is transmitted to users through the conventional satellite/terrestrial/cable bands by using QPSK/VSB/QAM transmission schemes.

Such a compression technology makes it possible to provide various services. The terrestrial broadcast can provide four or more standard definition (SD) channels through one channel band and can provide one HD channel through one channel band. Also, in digital TVs, supplementary information is transmitted together with video/audio contents in order to provide various services. The use of such supplementary information makes it possible to provide a broadcast guide service for increased channel information.

### DISCLOSURE OF THE INVENTION

### TECHNICAL PROBLEM

Embodiments provide a broadcast receiver capable of displaying audio signals and video signals on a multi-screen, and a multi-screen processing method using the same.

Embodiments provide a broadcast receiver capable of displaying audio signals and video signals, received from a receiving unit, on a multi-screen, and a multi-screen processing method using the same.

Embodiments provide a broadcast receiver capable of implementing a PIP (Picture In Picture) function between programs included in one channel received from a receiving unit, and a multi-screen processing method using the same.

Embodiments provide a broadcast receiver capable of implementing a PIP function by displaying video signal, carried on one broadcast channel, through a sub screen in an OSD (on screen display) mode and displaying an image of audio signal through a main screen, and a multi-screen processing method using the same.

Embodiments also provide a broadcast receiver capable of displaying an image of audio signal, carried on one broadcast channel, through a main screen in an OSD layer and displaying an image of video signal through a sub screen, and a multi-screen processing method using the same.

### TECHNICAL SOLUTION

In one embodiment, a broadcast receiver includes: a broadcast receiving unit receiving a broadcast signal of a physical channel; a decoding unit decoding the received broadcast signal into data of an audio service channel and a video service channel; an OSD (on screen display) generating unit outputting an image to an OSD layer in a multi-screen mode; a multi-screen processing unit processing a first screen and a second screen of a multi-screen by using the output data of the OSD generating unit and the decoding unit; and a control unit controlling each of the units in the multi-screen mode.

In another embodiment, a multi-screen processing method of a broadcast receiver includes: displaying an image in an OSD (on screen display) layer when an audio service channel is selected; checking whether a multi-screen mode is selected, after the audio service channel is selected; and displaying the OSD image on a main screen and displaying a selected video service channel on a sub screen, if the multi-screen mode is selected.

The details of one or more embodiments are set forth in the accompanying drawings and the description below. Other features will be apparent from the description and drawings, and from the claims.

### ADVANTAGEOUS EFFECTS

Embodiments can provide a broadcast receiver that can simultaneously display two screens of audio signal and video signal through one tuner.

Embodiments can improve the selection range of a broadcast receiver with a multi-screen function.

Embodiments make it possible to enjoy broadcast contents while enjoying audio signals provided through a broadcast receiver.

### BRIEF DESCRIPTION OF THE DRAWINGS

Fig. 1 is a block diagram of a broadcast receiver according to an embodiment.
Fig. 2 is a block diagram of a decoding unit of Fig. 1.
Figs. 3 and 4 are diagrams illustrating an audio service channel and a video service channel included in one physical channel according to an embodiment.
Fig. 5 is a diagram illustrating an example of the implementation of a PIP through a display unit according to an embodiment.
Fig. 6 is a diagram illustrating a display layer in a broadcast receiver according to an embodiment.
Fig. 7 is a flow chart illustrating a multi-screen processing process using a broadcast receiver according to an embodiment.

### BEST MODE FOR CARRYING OUT THE INVENTION

Reference will now be made in detail to the embodiments of the present disclosure, examples of which are illustrated in the accompanying drawings.

Terms used in embodiments are defined as follows. A channel means a frequency channel selected by a tuner. A service is a channel of an actual broadcasting station transmitted on a selected channel, which means a service channel identified by a PID (program identifier or product identifier). An event means a program provided by each service. In embodiments, in order to prevent a confusion caused by the use of the above terms, the channel is referred to as a physical channel, and the service is referred to as a service channel. In the digital broadcast, a plurality of service channels are provided through one physical channel. Herein, a physical channel means a channel frequency set in a tuner, and a service channel means broadcasting stations in the physical channel. The service channel can be identified by the PID, and a multi-screen means that two or more data are displayed on one display unit in different layers. Herein, the multi-screen may be represented in a PIP (Picture In Picture) mode.

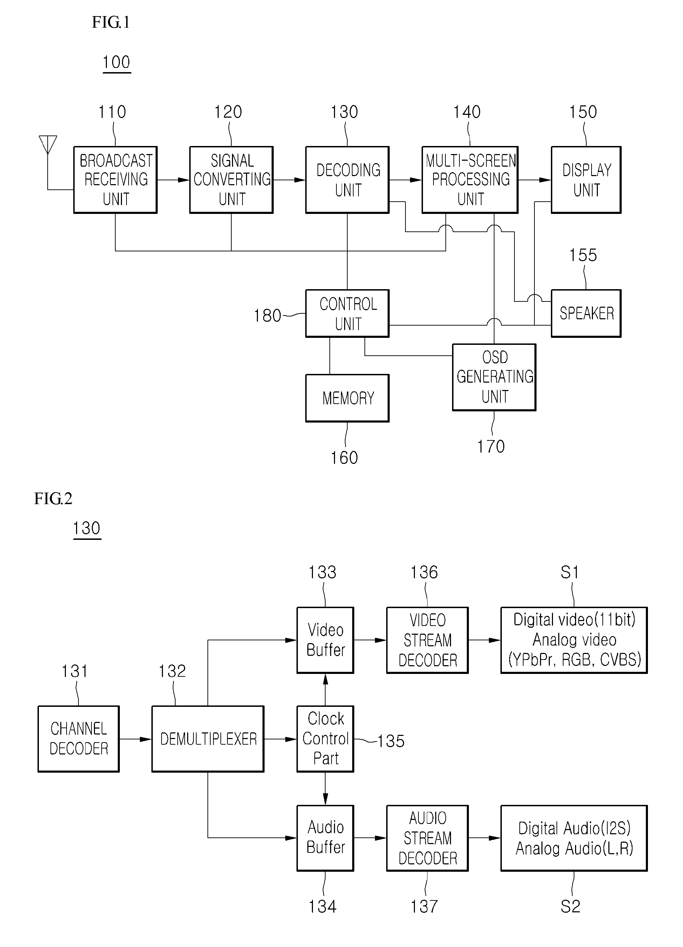

Fig. 1 is a block diagram of a broadcast receiver according to an embodiment.

Referring to Fig. 1, a broadcast receiver 100 includes a broadcast receiving unit 110, a signal converting unit 120, a decoding unit 130, a multi-screen processing unit 140, a display unit 150, a speaker 155, a memory 160, an OSD (On screen display) generating unit 170, and a control unit 180.

The control unit 180 controls an overall operation of the digital broadcast receiver. The control unit 180 receives a command of a user from a key input unit (not illustrated) to control the selection of service channels.

When receiving a multi-screen command, the control unit 180 performs a control operation so that an audio signal and a video signal received through one physical channel are processed in a multi-screen. The control unit 180 serves as a multi-screen display control unit.

The memory 160 may include a program memory for storing a program to an operation of the digital broadcast receiver, and a data memory for storing data that are generated during the execution of the program. Herein, the memory 160 may store a program for performing a multi-screen display operation, and may include a default image for an audio service channel.

Under the control of the control unit 180, the broadcast receiving unit 110 receives data of a physical channel selected by the user.

The physical channel includes one or more service channels. For example, the physical channel may include an HD (High Definition) broadcast signal or may include a plurality of SD (Standard Definition) broadcast signals. Hereinafter, for convenience in description, a broadcast signal generated by multiplexing four or less service channels through one physical channel will be described as an exemplary case.

The signal converting unit 120 demodulates a broadcast signal received by the broadcast receiving unit 110 into an original signal, and outputs a transport stream (TS) signal. That is, the signal converting unit 120 performs a demodulation operation by a demodulation scheme corresponding to a demodulation scheme of the received broadcast signal. The signal converting unit 120 may include a demodulator IC (integrated circuit).

The broadcast receiving unit 110 and the signal converting unit 120 may be defined as a tuner, and an embodiment may include one digital tuner to perform a multi-screen processing operation.

The decoding unit 130 may include an MPEG decoder. The MPEG decoder decodes a transport stream of a channel, and demultiplexes the same into an audio signal, a video signal, and broadcast information prior to output.

The decoding unit 130 decodes a plurality of video service channels, audio service channels and broadcast information data carried on a physical channel, and demultiplexes the same prior to output, thereby making it possible to view a service channel broadcasted by a broadcasting station.

Herein, the broadcasting station generates a TV signal stream by converting video, audio and transport data signals into scrambled digital signals according to the MPEG (Moving Picture Experts Group) standards and compressing/constructing the same into a packet stream.

The packet stream is a signal of predetermined bytes (e.g., 188 bytes). Herein, the signal may be divided into a header and a payload. The header includes information indicating the start of the signal, and a PID (packet Identifier) number indicating the ID of a signal carried in the payload. The payload carries video information, audio information, and supplementary information to be transmitted. The PID number is to demultiplex a time-multiplexed signal. The PID number may be used to identify whether the current packet is a video packet, an audio packet or supplementary information (SI).

The video/audio standards are the standards for compressed video/audio signal sequences. The video, audio and supplementary information are time-multiplexed and are carried in a plurality of transport streams. The signal sequence is also identified by a PID number. That is, the PID number is used to indicate whether the current packet is a video packet, an audio packet, or supplementary information (PSI).

The PID number includes PSIP (Program and System Information Protocol) among supplementary information in the U.S.-oriented digital TV standards. The PSIP includes an MGT (Master Guide Table) for managing all table versions, a TVCT (Terrestrial Virtual Channel Table) for storing information about a channel, an RRT (Rating Region Table) having a rating table of each program, an ETT (Extended Text Table) having detailed information of current programs and future programs, and an STT (System Time Table) for transmitting the current time value.

Accordingly, the PSIP digital stream is analyzed as follows. First, the system searches a stream having PAT table information, and provides it to the control unit to construct a table. Thereafter, the system constructs a PMT table, and searches a VCT table among the streams with a predetermined address (e.g., 0x1FFB) to identify whether the input stream is PSIP. Thereafter, the system searches streams constituting EIT tables to construct an EIT table. On the other hand, a stream generated according to the MPEG-2 system standards includes a PAT (Program Association Table) having PID information of a program map table, a PMT (Program Map Table) having program information included in the current RF channel digital stream, and an EIT having detailed information of each program.

Under the control of the control unit 180, the multi-screen processing unit 140 operates in a general mode or in a multi-screen mode. In case of the general mode, it outputs a service channel signal to the display unit and the speaker. A detailed description thereof will be omitted for conciseness.

The multi-screen processing unit 140 performs a multi-screen processing operation by using an audio service channel and a vide service channel carried on a physical channel. The multi-screen processing unit 140 may be defined by a scaler.

The multi-screen processing unit 140 converts the output signals of the decoding unit 130 and the OSD generating unit 170 to predetermined sizes of a main screen and a sub screen, and displays a multi-screen on the display unit 150.

The multi-screen processes a video signal of a video service channel by a first screen, outputs an audio signal of an audio service channel to the speaker, and processes a default image of the audio service channel by a second screen. In another embodiment, a default image of an audio service channel may be processed by a first screen, and a video signal of the video service channel may be processed by a second screen. The first screen may be a main screen, and the second screen may be a sub screen displayed in a portion of the main screen.

The display unit 150 displays the video signal processed by the multi-screen processing unit 140.

The speaker 155 operates under the control of the control unit 180. The speaker 155 outputs an audio signal of an audio service channel or an audio signal of a video service channel decoded by the decoding unit 130.

The OSD generating unit 170 extracts OSD information corresponding to a request signal of a user interface from the memory 160, and outputs an OSD video signal to the multi-screen processing unit 140. Also, if the current mode is a multi-screen mode or an audio channel mode, the OSD generating unit 170 outputs a default image stored in the memory 160 to an OSD (On Screen Display) layer. The default image may be a still image or a moving image, to which the present invention is not limited.

When an audio service channel is selected, the control unit 180 operates in an audio channel mode. When a multi-screen mode is selected in the audio channel mode, it may display a video signal of a video service channel by another screen. The audio channel mode outputs an audio signal of an audio service channel through the speaker 155, and outputs a default image of an audio channel through the display unit 150.

Also, when receiving a multi-screen mode command in a video service channel viewing state, the control unit 180 decodes a video signal and an audio signal of a channel displayed on the main screen, and decodes a video signal of a channel displayed on the sub channel. Herein, an audio signal of the channel displayed on the sub screen becomes a mute state because it is not demultiplexed. For example, if the audio service channel is the main screen and the video service channel is the sub screen, a default image of an audio service channel is displayed on the main screen, a video signal of a video service channel is displayed on the sub screen, and an audio signal of an audio service channel is displayed. Herein, the audio signal of the video service channel is muted. On the other hand, if the video service channel is the main screen and the audio service channel is the sub screen, the main screen and the audio signal is outputted by the video service channel and a default image of an audio service channel is displayed on the sub screen.

The multi-screen may include a video layer and an OSD layer. An image of the audio service channel is displayed on the OSD layer. The image displayed on the OSD layer may be a still image or a moving image, to which the present invention is not limited.

Also, if the multi-screen mode is selected, the control unit 180 may switch to another audio service channel or another video service channel in a physical channel by a channel switch command of the user.

Also, if the multi-screen mode is selected, the control unit 180 may provide service channel information included in a physical channel to the display unit 150, to be selected by the user.

Fig. 2 is a block diagram of the decoding unit 130 of Fig. 1.

Referring to Fig. 2, the decoding unit 130 includes a channel decoder 131, a demultiplexer 132, a video buffer 133, an audio buffer 134, a clock control unit 135, a video stream decoder 136, and an audio stream decoder 137.

The channel decoder 131 decodes a transport stream into an audio service channel signal, a video service channel signal, and broadcast information. Herein, the decoded channel may be a physical channel that includes a plurality of video service channels, audio service channels, and broadcast information.

The demultiplexer 132 analyzes the transport stream decoded by the channel decoder 131 and demultiplexes it into video data, audio data and broadcast information data prior to output. Herein, the audio data may be audio data of a video service channel or audio data of an audio service channel.

Because a plurality of video data, audio data and broadcast information data carried on a physical channel are identified by different PIDs (Packet IDs or Program IDs), the demultiplexer 132 demultiplexes the video data, the audio data and the broadcast information data through the PID. Herein, in case of the multi-screen mode, if a video signal is displayed on the sub screen, the demultiplexer 132 does not demultiplex audio data of the video service channel.

The video buffer 133 stores the demultiplexed vide data, and the audio buffer 134 stores the demultiplexed audio data. The video buffer 133 and the audio buffer 134 are configured to store data included in a physical channel at an initial channel search stage. If a specific channel is selected, the selected audio data and video data are stored and the output timing of the data is synchronized.

The clock control unit 135 controls the output timing of the video buffer 133 and the audio buffer 134. The timing control can synchronize the output of the video data and the audio data.

The video stream decoder 136 outputs a vide signal by decoding a video stream of a selected service channel among the video data outputted from the video buffer 133. The audio stream decoder 137 outputs an audio signal by decoding an audio stream of a selected service channel among the audio data outputted from the audio buffer 134.

Herein, if a video service channel is displayed on a sub screen in the multi-screen mode, the audio stream decoder 137 output an audio stream of the video service channel in a mute state without decoding the audio stream, and decodes an audio stream of the audio service channel prior to output.

A video signal (S1) outputted through the video stream decoder 136 is at least one of a digital video signal (e.g., 11 bits) and an analog video signal (YPbPr, RGB, CVBS). An audio signal (S2) outputted through the video stream decoder 137 includes a digital audio signal (I2S) and/or an analog audio signal (Left audio signal, Right audio signal).

Also, the broadcast information data may be stored in the memory, and may be decoded by a text decoder (not illustrated0 to be outputted as text information. The broadcast information data may include various information such as broadcast information of each time zone, broadcast information of each channel, caption information, and weather information.

If it is displayed on the main screen of the audio service channel, the broadcast information data corresponding to the audio service channel may be outputted to the OSD layer. That is, it may provide text information and singer information about an audio signal of an audio service channel.

Referring to Figs. 1 and 2, in case of the multi-screen mode, the control unit 180 controls the decoding of a selected channel of the decoding unit 130 and controls the output of a default image through the OSD layer through the OSD generating unit 170. The multi-screen processing unit 140 performs a multi-screen processing operation by using the output signals of the decoding unit 130 and the OSD generating unit 170. Accordingly, the broadcast receiver 100 can implement a multi-screen by an audio service channel and a video service channel included in a physical channel by using a single tuner.

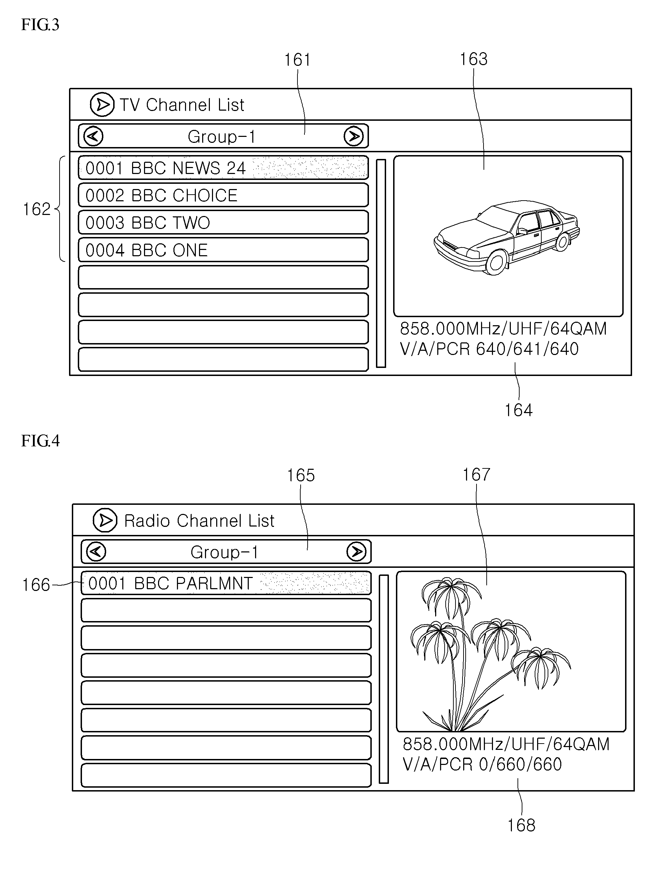

Figs. 3 and 4 are diagrams illustrating an audio service channel and a video service channel included in one physical channel according to an embodiment.

Referring to Fig. 3, a channel list item 162 about four video service channels (0001, 0002, 0003 and 0004), image information 163 about a selected channel, and detailed information 164 of the channel are displayed in a first group item 161 of a broadcast channel list.

A channel name such as 0001 BBC NEWS 24, 0002 BBC CHIOCE, 0003 BBC TWO, and 0004 BBC ONE may be displayed as a video service channel in the channel list 162; an on-air title image of a selected channel may be displayed in the channel image information; and a channel frequency, a modulation scheme, and a packet ID may be displayed in the detailed channel information 164.

Referring to Fig. 4, a list item 166 such as the channel names of one or more video service channels (0001) may be displayed in a first group item 165 of an audio service channel list, and a default image may be displayed as image information 167 of a selected channel. For example, on-air frequency information of the selected channel, a modulation scheme, and a packet IP may be displayed. Although the embodiment illustrates only one audio service channel, one or more audio service channels may be transmitted, to which the present invention is not limited.

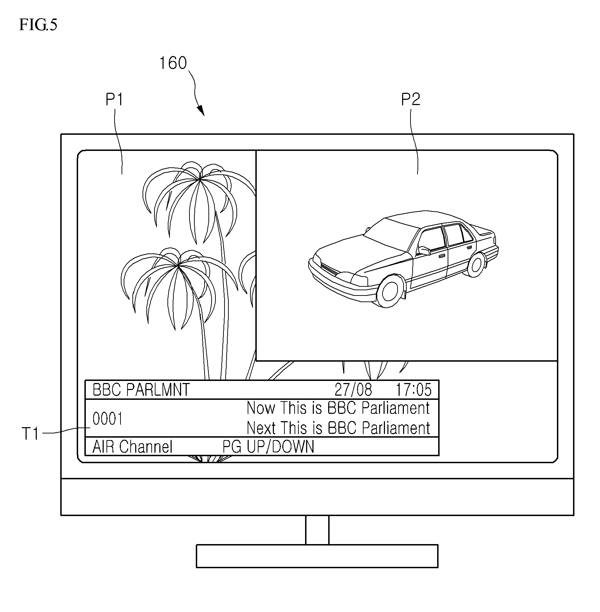

Fig. 5 is a diagram illustrating an example of the implementation of a multi-screen on the display unit 150 according to an embodiment.

Referring to Fig. 5, the display unit 150 displays multi-screens P1 and P2. The main screen P1 displays image information about the audio service channel of Fig. 4, and the sub screen P2 displays image information about the video service channel of Fig. 3.

That is, if a first video service channel of Fig. 3 is selected in a physical channel and a first audio service channel of Fig. 4 is selected, an image of the first audio service channel is displayed on an OSD layer and a video signal is displayed on the sub screen, thereby implementing the multi-screens P1 and P2 as illustrated in Fig. 5. Herein, the audio signal may be an audio signal of the audio service channel. Herein, the audio signal of the first video service channel becomes a mute state.

On the other hand, the first video service channel of Fig. 3 may be displayed on the main screen and the first audio service channel of Fig. 4 may be displayed on the sub screen to implement the multi-screen. Herein, the audio signal of the first audio service channel becomes a mute state.

Herein, it is possible to perform a channel switch between the video service channel list of Fig. 3 and/or the audio service channel list of Fig. 4 in the multi-screen mode. That is, a switch between the service channels in a physical channel can be performed by a channel switch command of the user.

The default image of the audio service channel is not switched. That is, one image is displayed for an audio playing time.

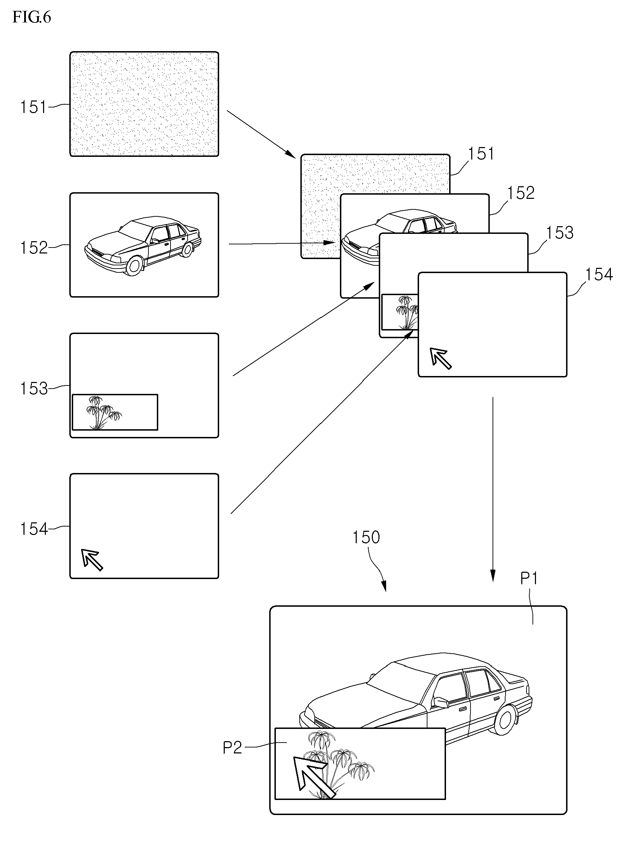

Fig. 6 is a diagram illustrating a display layer in the broadcast receiver according to an embodiment.

Referring to Fig. 6, the display layer may include three or more layers. For example, the display layer may include a background layer 151, a video layer 152, an OSD layer 153, and a sub picture layer 154.

The background layer 151 may displays a default layer, for example, a black screen. The video layer 152 may display an image of a selected channel. The OSD layer 153 may display a user interface or a default image. The sub picture layer 154 may be a sub screen that displays information such as a cursor.

Because the video layer 152 and the OSD layer 153 are displayed as different layers, the video layer 152 and the OSD layer 153 may be used to implement a multi-screen.

Herein, if a video signal is a sub screen, the uppermost layer is the video layer. If an audio signal is a sub screen, the uppermost layer is the OSD layer. That is, the video layer and the OSD layer may be changed into the main screen and the sub screen.

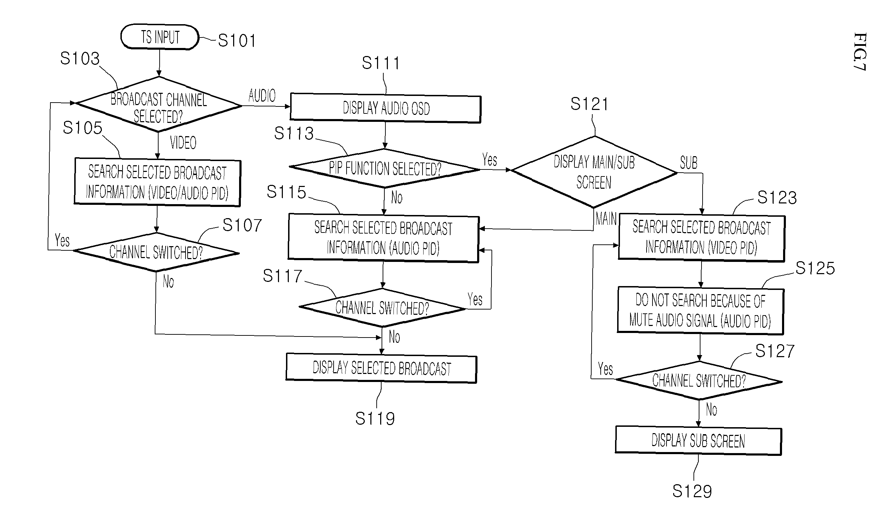

Fig. 7 is a flow chart illustrating a multi-screen processing process using a broadcast receiver according to an embodiment.

Referring to Fig. 7, when a transport stream is inputted (S101), a broadcast channel is selected by the user (S103). Herein, the broadcast channel is selected as a video service channel or an audio service channel.

If the video service channel is selected, information of the selected broadcast is searched to extract a video PID and an audio PID and check whether there is a channel switch (S107). If there is no channel switch, a video signal and an audio signal of the selected video service channel are displayed (S 119). Herein, if there is a channel switch (S107), the process proceeds to a step S103 of selecting a service channel as a broadcast channel.

If the audio service channel is selected (S103), a default image of the audio service channel is displayed on an OSD layer (S111). Thereafter, it is checked whether a multi-screen (PIP) mode is selected (S113). If a multi-screen mode is not selected, broadcast information of the selected channel is searched to extract an audio PID and check whether there is a channel switch (S 117). Thereafter, if there is no channel switch, the extracted audio PID is used to play the audio signal (S 115 and S 119).

If there is a channel switch (S 117), the audio service channel may be switched to another audio service channel in a physical channel.

If a multi-screen mode is selected in the PIP mode selection step (S113), main/sub screens are displayed (S121). Herein, the main screen maintains a default image of an audio service channel, and the sub screen displays a video signal of a video service channel (S129).

For the video signal of the sub screen, broadcast information of a selected video service channel is searched to extract a video PID (S123). A search operation is not performed because the audio signal of the selected video service channel is muted (S125). Thereafter, it is checked whether there is a channel switch (S127). If there is no channel switch, the searched video PID is used to display the sub screen (S129). If there is a channel switch, it may be switched to another video service channel in a physical channel.

In this case, the process proceeds to step S123.

The step (S107, S117, S127) of checking whether there is a channel switch is not limited to the above step. For example, the step may be performed before or after a broadcast display operation according to various embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

### INDUSTRIAL APPLICABILITY

Embodiments can provide a PIP function by using a single tuner.

Embodiments can process a multi-screen by using an audio signal and a video signal carried on one physical channel of a digital broadcast receiver.

Embodiments can improve the reliability of a digital broadcast receiver.

## Claims

1. A broadcast receiver comprising:
a broadcast receiving unit receiving a broadcast signal of a physical channel;
a decoding unit decoding the received broadcast signal into data of an audio service channel and a video service channel;
an OSD (on screen display) generating unit outputting an image to an OSD layer in a multi-screen mode;
a multi-screen processing unit processing a first screen and a second screen of a multi-screen by using the output data of the OSD generating unit and the decoding unit; and
a control unit controlling each of the units in the multi-screen mode.

2. The broadcast receiver according to claim 1, further comprising a signal converting unit demodulating the received broadcast signal of the broadcast receiving unit into a transport stream and outputting the transport stream to the decoding unit.

3. The broadcast receiver according to claim 1, wherein the broadcast receiving unit comprises a digital tuner.

4. The broadcast receiver according to claim 1, wherein the data outputted by the multi-screen processing unit are data included in one physical channel.

5. The broadcast receiver according to claim 1, wherein a predetermined image is displayed on the first screen in an OSD layer, and a video signal of the selected video service channel is displayed on the second screen.

6. The broadcast receiver according to claim 5, wherein the control unit mutes an audio signal of the video service channel.

7. The broadcast receiver according to claim 1, wherein the first screen displays a video signal of the video service channel, and the second screen displays an image of the OSD layer.

8. The broadcast receiver according to claim 5, wherein the first screen processes an image of the OSD layer as a main screen, and the second screen processes a video signal as a sub screen.

9. The broadcast receiver according to claim 1, wherein the control unit switches to another video service channel in the received physical channel according to a channel switch request of a user in the multi-screen mode.

10. The broadcast receiver according to claim 1, wherein the control unit switches to another audio service channel in the received physical channel according to a channel switch request of a user in the multi-screen mode.

11. The broadcast receiver according to claim 1, wherein the decoding unit comprises:
a channel decoder decoding broadcast information, audio signals and video signals of the received physical channel;
a demultiplexer demultiplexing the decoded video signals, audio signals and broadcast information;
a video buffer and an audio buffer storing the video signals and the audio signals demultiplexed by the demultiplexer;
a video decoder decoding the video signals stored in the video buffer; and
an audio decoder decoding the audio signals stored in the audio buffer.

12. A multi-screen processing method of a broadcast receiver comprising:
displaying an image in an OSD (on screen display) layer when an audio service channel is selected;
checking whether a multi-screen mode is selected, after the audio service channel is selected; and
displaying the OSD image on a main screen and displaying a selected video service channel on a sub screen, if the multi-screen mode is selected.

13. The multi-screen processing method according to claim 12, wherein the audio service channel and the video service channel are channels included in one physical channel received through a single tuner.

14. The multi-screen processing method according to claim 12, further comprising performing a channel switch between video service channels in the physical channel by a channel switch of a user.

15. The multi-screen processing method according to claim 12, wherein the image of the OSD layer is a default image, and the audio signal of the video service channel is muted.
